# EUROPEAN PATENT APPLICATION

(11) **EP 2 123 504 A2**
(43) Date of publication of application: **25.11.2009**
(21) Application number: 09380105.8
(22) Date of filing: 22.05.2009
(51) Int. Cl.: B60N 2/20, B60N 2/48, B60N 2/12

(54) **Release mechanism for headrests of vehicle collapsible seats**

(30) Priority: 23.05.2008 ES 200801091 U
(71) Applicant: Seat, S.A., 08760 Martorell (ES)
(72) Inventor: Toyas Ruiz, Alberto, 08760 Martorell, Barcelona (ES)
(74) Representative: Carvajal y Urquijo, Isabel

(57) **Abstract**

Release mechanism for the headrest of collapsible vehicle seats, whose headrests comprise two support bars (5) which go through and can slide through the corresponding bushings (6) mounted on the upper part of a frame (1), and whose seat has anchors fixing it to the use position, and a lateral lever (4), which, when operated, allows the release of said anchors. The mechanism comprises a retractable blocking device (7) of the support bars of the headrest, being said device movable between an active position, in which it acts against the transverse inserts (8) of said bars (5), preventing their axial movement through the bushing (6), and an inoperative position, in which it does not rest against said inserts (8), releasing the support bars to allow their free axial movement through the said bushings (6).

## Description

### FIELD OF THE INVENTION

The present invention refers to a release mechanism for the headrest of collapsible vehicle seats, especially applicable to the collapsible front seats of automobiles, to allow the free movement of the headrest while the seat is being reclined.

More specifically, the release mechanism of the invention is applied to headrests comprising one or two support bars, which go through and can slide through the bushings mounted on the upper part of the seat headrest.

It is well-known that there is a problem when a passenger wants to access the rear seats of a two-door vehicle and the headrest of the front seat is in its highest position. At that point, when trying to recline the seat the headrest crashes against the car roof coating, preventing the complete horizontal movement of the seat, thus making the access extremely difficult.

### BACKGROUND OF THE INVENTION

In order to block the headrest at the desired height selected by the passenger on the seat, the support bars have transverse inserts, against which a retractable catch mounted on the headrest acts, blocking said bars, to prevent their movement. If it is desired to allow the movement of the bars it is necessary to pull the catch so that it is retracted against the force of a spring pushing it to the blocking position.

When the front seat is reclined with the headrest in its elevated position, it is possible to act first on the aforementioned catches, to release the support bars of said headrests. However, this operation can be complicated and is always extremely uncomfortable.

### DESCRIPTION OF THE INVENTION

The object of the present invention is to eliminate the problems stated, by means of a mechanism which enables to easily and comfortably release the support bar(s) of the headrest, so that they can move freely, together with the headrest, to a lower position while the seat is being reclined, enabling to perform this operation without any obstacle.

The mechanism of the invention comprises a retractable blocking device of the support bar(s) of the headrest, being said device movable between an active position, in which it acts against the transverse inserts of said bars, preventing their axial movement through the bushing, and an inoperative position, in which it does not rest against said inserts, releasing the support bars to allow their free axial movement through the aforementioned bushing.

The aforementioned retractable blocking device comprises an arm which is perpendicular to the support bar(s) of the headrest and mounted on a chassis which can move perpendicularly to said support bars between an approximation position, in which it rests against the bars for being fitted in one of the transverse inserts thereof, preventing their movement, and a position of maximum separation, in which they do not rest against the bars, so that they can move freely through the bushings. The chassis or carriage is connected by a cable cased into the lateral release lever of the seat anchors, so that when said lever is operated to release the seat, the tensioning cable of the blocking device of the headrest bars is tensed at the same time, making the arm of said device go from the active position to the inoperative position, in which the bar(s) are released and they can move freely through the bushings.

The mechanism of the invention thus allows the easy access of passengers to the rear seats of two-door vehicles, since when the lever to release the front seat is operated, located on one of the sides thereof, the mechanism holding back or blocking the bars in their lowest position is released at the same time, when said bars crash against the roof or against a sun visor of the car, while the back or front seat is reclined.

### BRIEF DESCRIPTION OF THE DRAWINGS

The attached drawings show a non-limiting example of an embodiment, and the description of said drawings will help understand better the constitution, characteristics and advantages of the mechanism of the invention. In the drawings:
Figure 1 shows a back elevation view of the frame of the back of an automobile front seat, with a headrest supported by two bars and with the release mechanism of the invention.
Figure 2 shows a scheme of the constitution of the mechanism of the invention.
Figure 3 corresponds to detail A of figure 1, at a larger scale and without the support bar of the headrest.
Figure 4 shows a perspective view of the retractable blocking device of the mechanism of the invention.
Figures 5 and 6 show the blocking device in its active and inoperative positions, respectively.

### DETAILED DESCRIPTION OF AN EMBODIMENT

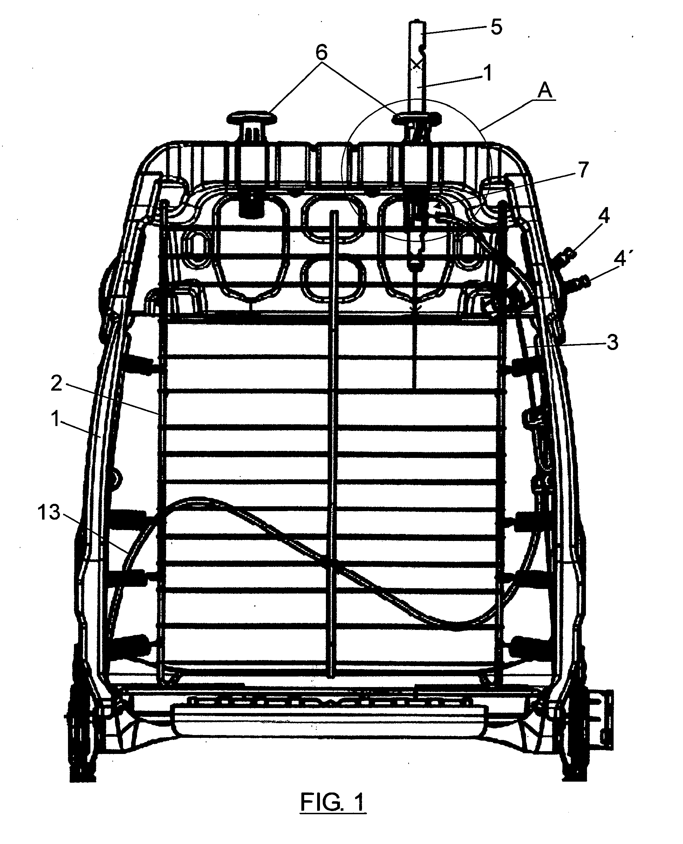

Figure 1 shows a back elevation view of the frame of the back of a collapsible front seat of an automobile, comprising a frame 1 and a chassis 2 based on metal rods. The seat is' mounted on rails along which it can move in a direction parallel to the longitudinal axis of the vehicle, and the position of the seat in the rails can be fixed by means of anchors, not represented, which have a familiar constitution and whose release is attained by pulling a cable 3 which can be operated by means of a lever 4 which is mounted on the outer side of the seat back and which rotates around an axis 5.

The seat of the invention also includes a headrest, not represented, which has one or two lower support bars 5, which go through and can move along bushings 6 mounted on the back, through the upper part thereof.

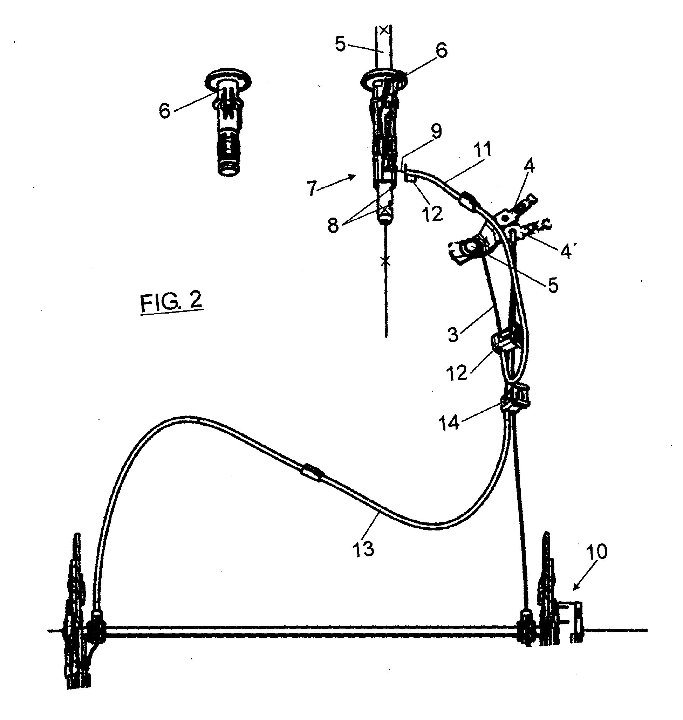

The movement of the support bars 5 through the bushings 6 can be blocked by the mechanism of the invention, which includes a retractable blocking device, generally indicated by number 7 in figure 2 and which can act on transverse inserts 8 of the bars 5, as it will be indicated below.

The blocking device 7 can occupy an active position, in which it acts against the transverse inserts 8 of the bars 5, preventing the axial displacement thereof through the corresponding bushing 6, and an inoperative position, in which it does not rest against said inserts, thus releasing the support bars 5 for their free axial movement through the bushings 6. To move the blocking device from the active position to the inoperative position, said device is connected by means of a tensioning cable 9 which is tensed to the lever 4 which activates the device to release the seat anchors 10. The tensioning cable 9 moves through a cover 11 fixed by means of supports 12. In the same way the cable 3 to release the seat anchors 10 moves through a cover 13 fixed by means of the corresponding supports 14.

In figure 2, the reference 4' indicates the position of the lever 4 when it is operated to release the blocking device 7 of the headrest and of the seat anchors 10. This lever is pushed to the resting position, indicated by number 4, through a spring, not represented, through which the cables 3 and 9 are moved through the corresponding covers until the device 7 and anchor 10 are placed in the corresponding active or blocking position.

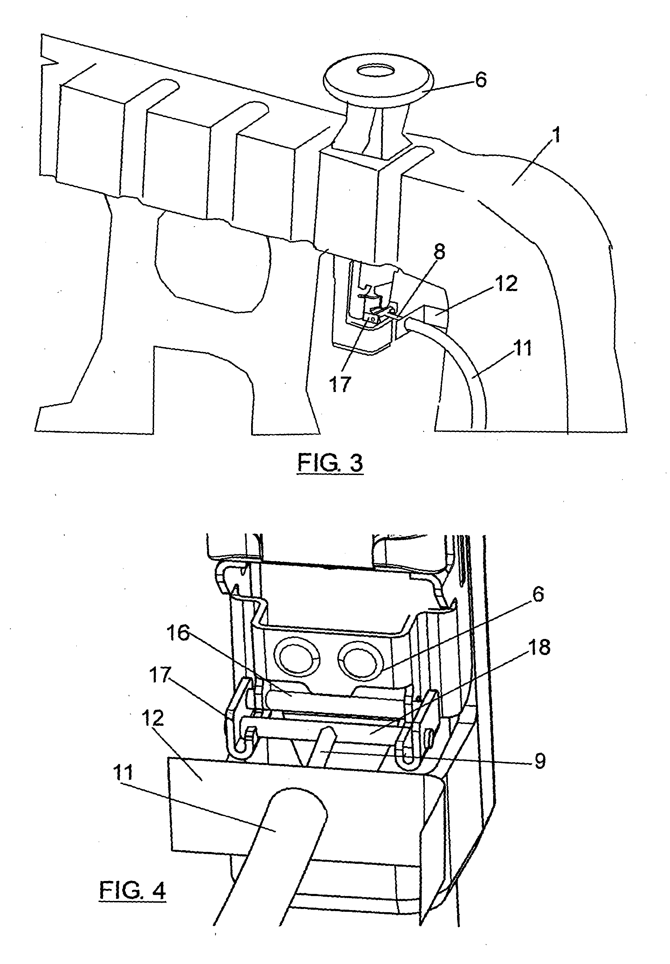

The retractable blocking device 7 for the support bars 5 of the headrest is shown in figures 3 and 4 and comprises an arm 16 which is perpendicular to the corresponding support bar 5 and is located immediately below the lower end of the bushing 6. This bar is mounted on a chassis or carriage 17 which can be moved in perpendicular direction to the support bar and is connected to the tensioning cable 9, for example through the second arm 18 parallel to arm 16.

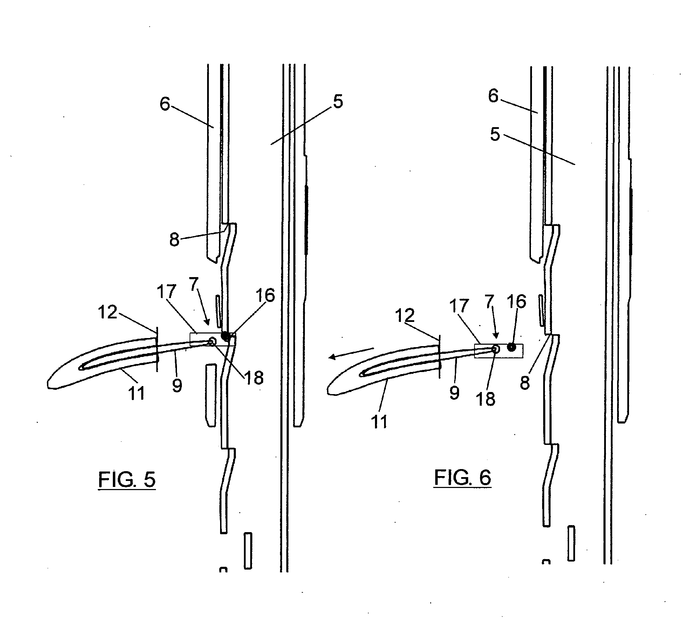

The operation of the mechanism of the invention will be explained with reference to figures 5 and 6.

When the lever 4 is in its resting position, the blocking device 7 is in its active position, in which the arm 16 rests and fits against one of the inserts 8 of the bar 5, preventing its axial movement through the bushing 6, as represented in figure 5.

When the lever 4 is activated to go to position 4', figure 2, the blocking device 7 occupies the inoperative position shown in figure 6, in which it has been moved in perpendicular direction to the bar 5 going further away from it, so that the arm 16 does not rest or fit against any of the inserts 8 of the bar 5, thus being said bar able to move freely along the bushing 6.

With the mechanism of the invention it is possible to attain that the bars 5 supporting the headrest are unblocked at the same time, to allow their free movement on the bushings 6 through which they are mounted on the headrest of the seat, when the lever 4 is operated to release the anchors 10 of the vehicle front seat. That is to say, through the operation of the lever 4, the release of the seat and headrest is attained at the same time.

## Claims

1. Release mechanism for the headrest of collapsible vehicle seats, whose headrests comprise two support bars which go through and can slide through the corresponding bushings mounted on the upper part of the seat headrest, and whose seat has anchors fixing it to the use position, and a lateral lever, which, when operated, allows the release of said anchors, **characterized in that** it comprises a retractable blocking device of the support bars of the headrest, being said device movable between an active position, in which it acts against the transverse inserts of said bars, preventing its axial movement through the bushing, and an inoperative position, in which it does not rest against said inserts, releasing the support bars to allow their free axial movement through the said bushings; whose blocking mechanism is connected by a cased cable fixed to the lateral lever of the back of the seat, to shift it from the active position to the inoperative position, in which the support bar(s) of the headrest are released.

2. Mechanism according to claim 1, **characterized in that** the retractable blocking device is immediately below the lower end of the bushing of the support bars and comprises an arm perpendicular to said bar, which is mounted on a chassis or carriage which can move in perpendicular direction to the support bar, whose carriage is connected to the end of the cased tensioning cable and is pushed to the active position by means of a spring.
